# EUROPÄISCHE PATENTSCHRIFT

(11) **EP 2 769 426 B1**
(45) Veröffentlichungstag und Bekanntmachung des Hinweises auf die Patenterteilung: **17.05.2017**
(21) Anmeldenummer: 12770028.4
(22) Anmeldetag: 20.09.2012
(51) Int. Cl.: H01M 2/10, H01M 10/04, H01M 10/42, H01M 10/625, H01M 10/6556, H01M 10/6567, H01M 10/613, H01M 10/615

(54) **VORRICHTUNG ZUR SPANNUNGSVERSORGUNG**
APPARATUS FOR VOLTAGE SUPPLY
DISPOSITIF D'ALIMENTATION EN COURANT

(30) Priorität: 18.10.2011 DE 102011084660
(43) Veröffentlichungstag der Anmeldung: 27.08.2014
(73) Patentinhaber: Bayerische Motoren Werke Aktiengesellschaft, 80809 München (DE)
(72) Erfinder: DIRMEIER, Micha, 80809 München (DE); SIERING, Sebastian, 80333 München (DE); LUSTIG, Robert, 81679 München (DE)
(74) Vertreter: Diener, Reinhold Jürgen
(86) Internationale Anmeldenummer: PCT/EP2012/068482
(87) Internationale Veröffentlichungsnummer: WO 2013/056938

(56) Entgegenhaltungen:
- EP-A1- 2 362 464
- DE-A1- 10 238 235
- DE-A1-102008 034 874
- JP-A- 2011 034 775
- US-A1- 2011 020 676

## Beschreibung

Die vorliegende Erfindung betrifft eine Vorrichtung zur Spannungsversorgung gemäß dem Oberbegriff des Patentanspruches 1.

Eine derartige Vorrichtung ist aus der US 2011/0020676 A1 bekannt. Zum technischen Hintergrund der vorliegenden Erfindung zählen die EP 2 362 464 A1, JP 2011 034775 A, DE 102 38 235 A1 sowie die DE 10 2008 034 874 A1.

Hybridfahrzeuge und reine Elektrofahrzeuge benötigen Hybridfahrzeuge und reine Elektrofahrzeuge benötigen für den Fahrzeugantrieb einen leistungsfähigen elektrischen Energiespeicher. Mehrere "Speicherelemente" bzw. Speicherzellen können zu einem sogenannten "Zellmodul" verschaltet sein. Ein Energiespeicher wiederum kann aus mehreren derartigen Zellmodulen bestehen. In einem elektrischen Energiespeicher können während des Betriebs beträchtliche Wärmeleistungen entstehen. Um ein "Überhitzen" des Energiespeichers zu vermeiden, ist daher zumindest in manchen Betriebszuständen eine aktive Kühlung erforderlich. Aufgabe der Erfindung ist es, eine Vorrichtung zur Spannungsversorgung zu schaffen, die eine Kühleinrichtung aufweist, welche möglichst einfach und kompakt aufgebaut und in einfacher Weise an einen Kühl- bzw. Kältemittelkreislauf anschließbar ist. Diese Aufgabe wird durch die Merkmale des Patentanspruches 1 gelöst. Vorteilhafte Ausgestaltungen und Weiterbildungen der Erfindung sind den Unteransprüchen zu entnehmen. Ausgangspunkt der Erfindung ist eine Vorrichtung zur Spannungsversorgung, insbesondere zur Spannungsversorgung eines Elektroantriebs eines Kraftfahrzeugs. Die Vorrichtung weist ein Zellmodul auf, welches wiederum mehrere miteinander elektrisch verschaltete Speicherzellen aufweist. Die einzelnen Speicherzellen können z.B. in einer Reihe hintereinander, in einem Rechteckraster, oder in anderer Weise relativ zueinander angeordnet sein. Sie weisen eckige Gehäuse auf. Hintereinander angeordnete Speicherzellen eines Zellmoduls sind zwischen einem ersten und einem zweiten plattenartigen Element angeordnet. Die plattenartigen Elemente können als "Druckplatten" bezeichnet werden. Die Druckplatten sind mittels Spannelementen (sogenannten "Spannbändern") zusammengespannt. Dadurch wird vermieden, dass sich das Zellmodul im Betrieb in nennenswertem Umfang deformiert.

Die Speicherzellen eines Zellmoduls sind auf einem plattenartigen Kühlkörper angeordnet und thermisch leitend mit dem plattenartigen Kühlkörper verbunden. Es kann vorgesehen sein, dass Längsachsen der Speicherzellen senkrecht auf dem plattenartigen Kühlkörper stehen. Unterseiten der Speicherzellen sind mittels eines thermisch leitenden Klebers mit dem Kühlkörper verbunden. Die Seitenflächen der Speicherzellen können z.B. mittels eines thermisch leitenden Klebers mit dem Kühlkörper verbunden sein. In dem Kühlkörper ist ein Kühlkanalsystem vorgesehen, das mindestens einen Zulauf und mindestens einen Ablauf aufweist. Das Kühlkanalsystem kann von einem Kühlmittel bzw. einem Kältemittel durchströmt sein. Unter dem Begriff "Kühlmittel" versteht man in diesem Zusammenhang ein in jedem Betriebszustand flüssiges Kühlmittel. Unter dem Begriff "Kältemittel" versteht man eine Substanz, die während des Betriebs teilweise oder ganz einen flüssigen und/oder gasförmigen Zustand annehmen kann, je nach den momentanen Temperatur- und Druckverhältnissen. Das Kühlkanalsystem des Kühlkörpers kann somit beispielsweise an einen Kältemittelkreislauf einer Fahrzeugklimaanlage angeschlossen sein.

Der Kern der Erfindung besteht darin, dass der mindestens eine Zulauf und/oder der mindestens eine Ablauf des Kühlkanalsystems im Bereich einer "Oberseite" des ersten und/oder des zweiten plattenartigen Elements angeordnet ist.

"Im Bereich einer Oberseite" bedeutet, in einem Bereich, der von dem plattenartigen Kühlkörper zumindest ein Stück weit beabstandet ist bzw. dem plattenartigen Kühlkörper abgewandt ist. Vorzugsweise sind der Zulauf und der Ablauf an einer Oberseite des ersten und/oder des zweiten plattenartigen Elements und somit tatsächlich von dem plattenartigen Kühlkörper abgewandt angeordnet. Eine Anordnung des Zulaufs und des Ablaufs im Bereich der Oberseite eines der plattenartigen Elemente oder der plattenartige Elemente hat den Vorteil, dass ein erstes Zellmodul unmittelbar an ein zweites Zellmodul "gereiht" werden kann. Eine Zugänglichkeit des Zulaufs und des Ablaufs von "oben her" erleichtert ferner die Montage bzw. den Anschluss an ein Kühl- oder Kältemittelsystem an einen Kühl- oder Kältemittelkreislauf, insbesondere wenn mindestens ein Zellmodul bereits in einem bauraumoptimierten Gehäuse untergebracht ist. Erfindungsgemäß ist in (im Sinne von im Innern) dem ersten und/oder dem zweiten plattenartigen Element ein sich von dem Kühlkanalsystem des plattenartigen Kühlkörpers zu dem Zulauf und ein von dem Kühlkanalsystem zu dem Ablauf erstreckender (Verbindungs-)Kanal vorgesehen. Nach einer Weiterbildung der Erfindung ist an dem ersten und/oder dem zweiten plattenartigen Element ein sich von dem Kühlkanalsystem des plattenartigen Kühlkörpers zu dem Zulauf und ein von dem Kühlkanalsystem zu dem Ablauf erstreckender (Verbindungs-)Kanal vorgesehen. Begrifflich unterschieden wird bei einer derartigen Anordnung das in dem plattenartigen Kühlkörper integrierte Kühlkanalsystem, der Zulauf und der Ablauf sowie Verbindungskanäle, über die der Zulauf bzw. der Ablauf mit dem Kühlkanalsystem verbunden sind.

In (im Sinne von innerhalb) oder an dem ersten und/oder dem zweiten plattenartigen Element kann ein sich von dem Kühlkanalsystem zu dem Zulauf und ein sich von dem Kühlkanalsystem zu dem Ablauf erstreckender Kanal vorgesehen sein.

Nach einer Weiterbildung der Erfindung bildet der sich von dem Kühlkanalsystem zu dem Zulauf erstreckende Kanal den ersten Verbindungskanal und der sich von dem Kühlkanalsystem zu dem Ablauf erstreckende Kanal den zweiten Verbindungskanal, wobei Kühl- bzw. Kältemittel unmittelbar in diesen Kanälen strömt. Sofern diese Kanäle in das erste und/oder das zweite plattenartige Element integriert sind, kann vorgesehen sein, dass das Kühl-oder Kältemittel unmittelbar in diesen Kanälen, d.h. unmittelbar in dem bzw. den plattenartigen Element(en) strömt.

Der Zulauf und/oder der Ablauf können integraler Bestandteil des ersten bzw. des zweiten plattenartigen Elements sein. Alternativ dazu können der Zulauf und/oder der Ablauf durch separate Flanschelemente realisiert sein, die mit den Verbindungskanälen verbunden sind.

Alternativ dazu kann vorgesehen sein, dass es sich bei den Verbindungskanälen, welche das in dem plattenartigen Kühlkörper vorgesehene Kühlkanalsystem mit dem Zulauf bzw. dem Ablauf verbinden, um separate Bauteile handelt, die in den Kanälen, die an oder in dem ersten und/oder dem zweiten plattenartigen Element vorgesehen sind, angeordnet sind. Eine Anordnung der Verbindungskanäle in den Kanälen, die in oder an dem ersten und/oder zweiten plattenartigen Element vorgesehen sind, hat den Vorteil, dass die Verbindungskanäle gegenüber den Kanälen thermisch isoliert sein können. Vorzugsweise sind die Verbindungskanäle in den Kanälen so angeordnet, dass sie die Kanäle nicht unmittelbar berühren.

Die Verbindungskanäle können stoffschlüssig mit dem Kühlkanalsystem verbunden sein. Ihre einen Enden können z. B. mit einem Auslass bzw. mit einem Einlass des Kühlkanalsystems verlötet sein. Ebenso können der Zulauf und der Ablauf stoffschlüssig mit anderen Enden der Verbindungskanäle verbunden sein, z. B. durch Lötverbindungen.

Ein oder mehrere der oben beschriebenen Zellmodule können in ein Speicher- bzw. Batteriegehäuse eingesetzt sein. Jedem der Zellmodule ist ein separater Kühlkörper zugeordnet. Vorzugsweise ist der Kühlkörper eines Zellmoduls thermisch gegenüber dem Speichergehäuse isoliert. Dies kann insbesondere dadurch erreicht werden, dass der Kühlkörper eines Zellmoduls das Speichergehäuse nicht unmittelbar berührt. Zwischen eine Unterseite eines Kühlkörpers eines Zellmoduls und eine Oberseite eines Bodens des Speichergehäuses können z.B. thermisch schlecht leitende (d.h. thermisch isolierende) Abstandshalter oder eine flächige Isolierschicht eingebracht sein. Die Abstandshalter bzw. die Isolierschicht können insbesondere elastisch sein.

Alternativ dazu kann vorgesehen sein, dass die plattenartigen Elemente, welche die Speicherzellen eines Zellmoduls zusammenspannen, über Auflager auf dem Boden des Speichergehäuses aufliegen bzw. aufstehen und thermisch von dem Kühlkörper entkoppelt sind.

Im Folgenden wird die Erfindung im Zusammenhang mit der Zeichnung näher erläutert. Es zeigen:
- Figur 1: Ein Zellmodul gemäß der Erfindung in perspektivischer Darstellung;
- Figur 2: einen Kühlkörper eines Zellmoduls mit davon abstehenden Verbindungskanälen und einem Zulauf und einem Ablauf;
- Figur 3: den Kühlkörper der Figur 2 mit einer auf die Verbindungskanäle aufgeschobenen Druckplatte;
- Figur 4: einen Längsschnitt durch ein Zellmodul gemäß der Erfindung;
- Figur 5: einen zu dem Längsschnitt der Figur senkrechten Schnitt durch eine Druckplatte eines Zellmoduls.

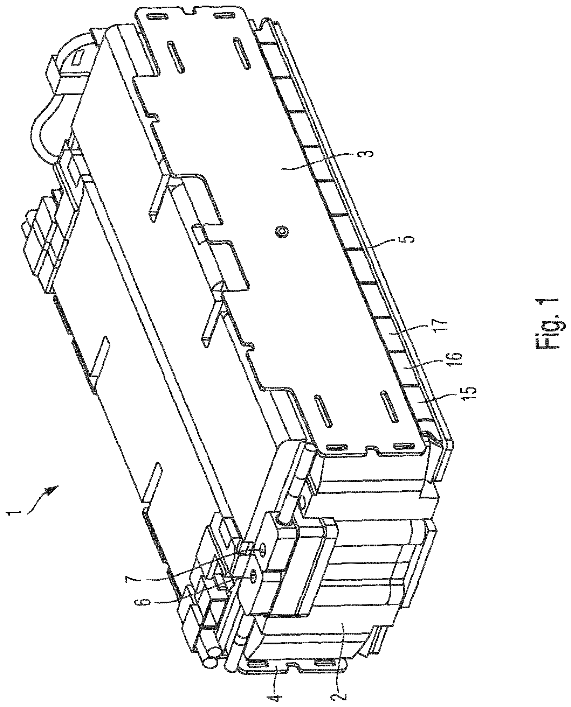

Figur 1 zeigt ein Zellmodul 1 eines hier nicht näher dargestellten elektrischen Energiespeichers, der zur Spannungsversorgung des Elektroantriebs eines Kraftfahrzeugs vorgesehen sein kann.

Das Zellmodul 1 weist an seinen Stirnseiten jeweils eine Druckplatte auf, von denen hier lediglich die vordere Druckplatte 2 zu sehen ist. Zwischen den Druckplatten sind hier nicht näher zu erkennende Speicherzellen geschachtelt hintereinander angeordnet. Die Druckplatten sind auf einer Vorder- und einer Rückseite des Zellmoduls 1 über Spannplatten, die im Folgenden auch als "Spannbänder" 3, 4 bezeichnet werden, in Längsrichtung des Zellmoduls 1 zusammengespannt.

Die in Figur 1 nur im unteren Bereich des Zellmoduls 1 erkennbaren Speicherzellen 15, 16, 17 etc. stehen auf einer Kühlplatte 5 auf. Unterseiten der Speicherzellen können über einen thermisch leitenden Kleber oder in anderer Weise gut thermisch leitend mit der Kühlplatte 5 verbunden sein.

Im Innern der Kühlplatte 5 ist ein hier nicht näher dargestelltes Kühlkanalsystem vorgesehen, das z.B. von einem Kühlmittel oder einem Kältemittel durchströmt sein kann. Das Kühlkanalsystem der Kühlplatte 5 steht in Fluidverbindung mit einem Kühlmittelzulauf 6 und einem Kühlmittelablauf 7, die in einem "oberen Bereich", hier an einer Oberseite der vorderen Druckplatte 2, angeordnet sind. Über den Kühlmittelzulauf und den Kühlmittelablauf kann das in die Kühlplatte 5 integrierte Kühlkanalsystem an einen Kühl- oder Kältemittelkreislauf eines Fahrzeugs angeschlossen werden, so dass die Speicherzellen des Zellmoduls 1 aktiv gekühlt werden können.

An der in Figur 1 nicht zu erkennenden hinteren Stirnseite des Zellmoduls kann ebenfalls ein Kühlmittelzulauf und ein Kühlmittelablauf vorgesehen sein.

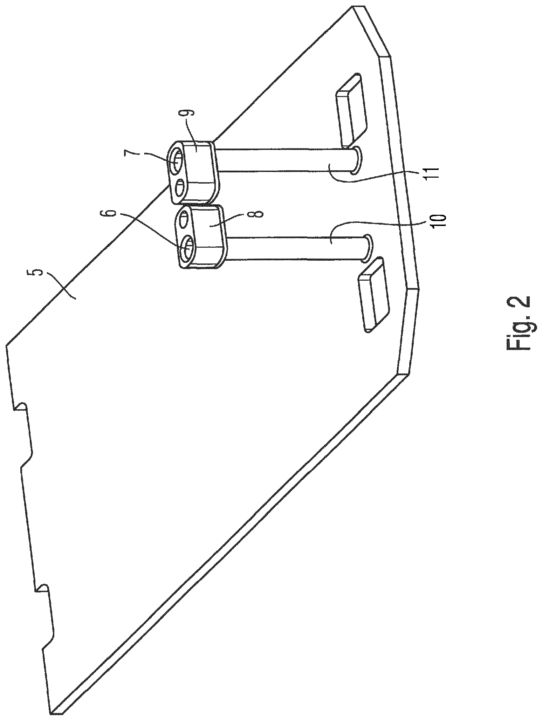

Figur 2 zeigt die Kühlplatte 5 der Figur 1 in Einzeldarstellung. Der Kühlmittelzulauf 6 ist durch ein erstes Flanschelement 8 gebildet. Der Kühlmittelablauf 7 ist durch ein zweites Flanschelement 9 gebildet. An Unterseiten der beiden Flanschelemente 8, 9 ist ein erster bzw. zweiter Verbindungskanal 10, 11 angelötet. Die Flanschelemente können auch in anderer Weise in Fluidverbindung mit den Verbindungskanälen 10, 11 stehen. Die Verbindungskanäle könnten z.B. mit den Flanschelementen verschraubt sein. Untere Enden der Verbindungskanäle 10, 11 wiederum sind hier stoffschlüssig, z.B. über Lötverbindungen mit dem im Innern der Kühlplatte 5 vorgesehenen Kühlkanalsystem verbunden.

Über den Kühlmittelzulauf 6 kann Kühl- oder Kältemittel in das Kühlkanalsystem der Kühlplatte 5 gepumpt und über den Kühlmittelablauf 7 erwärmtes bzw. erhitztes Kühl- oder Kältemittel aus dem Kühlkanalsystem abgeführt werden.

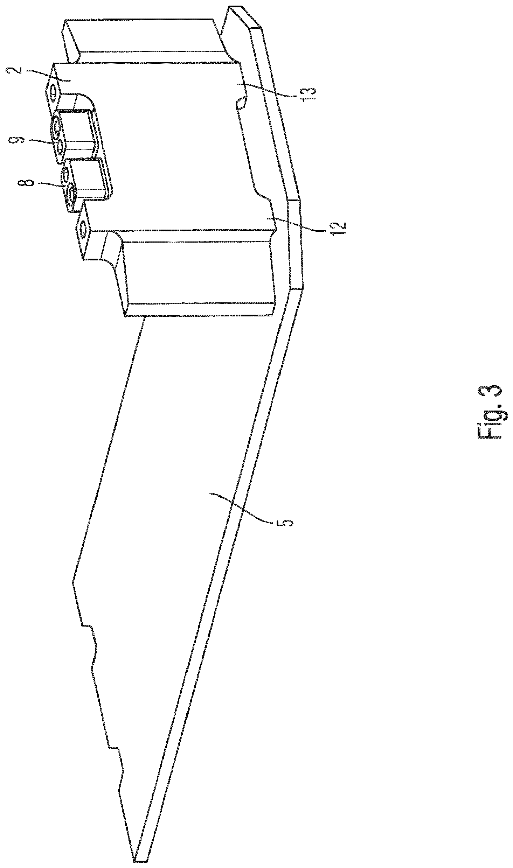

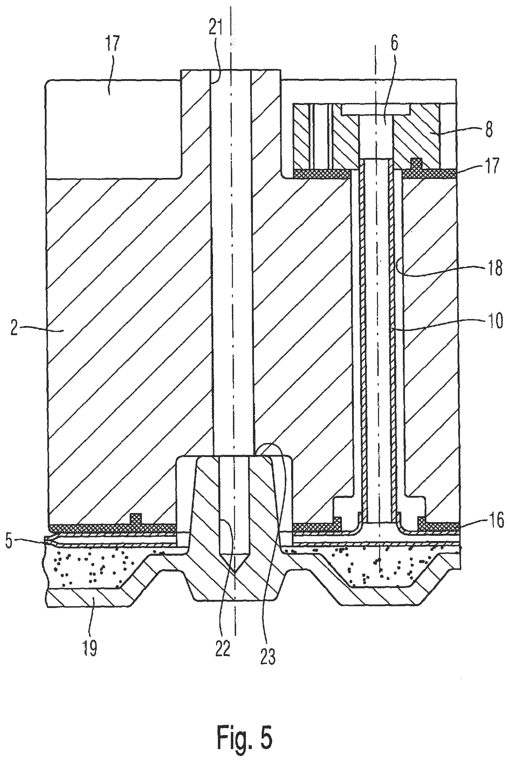

Figur 3 zeigt die Kühlplatte 5 der Figur 2 mit "aufgesetzter" Druckplatte 2. Die Druckplatte 2 weist ein linkes und ein rechts Auflager 12 bzw. 13 auf, welches zur Befestigung im Gehäuse durch die Kühlplatte 5 hindurch ragt. Alternativ dazu können die Auflager 12 bzw. 13 auch weiter oben innerhalb der Druckplatte liegen und dort mit dem Speichergehäuse verbunden sein (vgl. Fig. 5).

In der Druckplatte 2 ist ein dem Verbindungskanal 10 zugeordneter erster Kanal und ein dem Verbindungskanal 11 zugeordneter zweiter Kanal (nicht dargestellt) vorgesehen. Die beiden Kanäle durchsetzen die Druckplatte 2 von unten nach oben. Bei der Montage des Zellmoduls werden zunächst die Verbindungskanäle 10, 11 an die zugeordneten Fluidverbindungen des Kühlkanalsystems der Kühlplatte 5 angelötet. Anschließend wird die Druckplatte 2 aufgesetzt, wobei die Verbindungskanäle 10, 11 in die in der Druckplatte 2 vorgesehenen Kanäle eingeführt werden. Anschließend werden die Flanschelemente 8, 9 mit den oberen Enden der Verbindungskanäle 10, 11 verbunden.

Alternativ dazu sind die Kanäle in der Druckplatte zu einer Seite hin offen oder die Druckplatte ist zweiteilig, um die Platte auch nachdem die Flansche 8, 9 mit den Kanälen verbunden wurden (vgl. Fig. 2), montieren zu können.

In gleicher Weise wird auch die hintere Druckplatte (nicht dargestellt) montiert. Vor oder nach der Montage der Druckplatten können die einzelnen Speicherzellen auf die Oberseite der Kühlplatte 5 gestellt bzw. mit der Kühlplatte 5 verklebt werden.

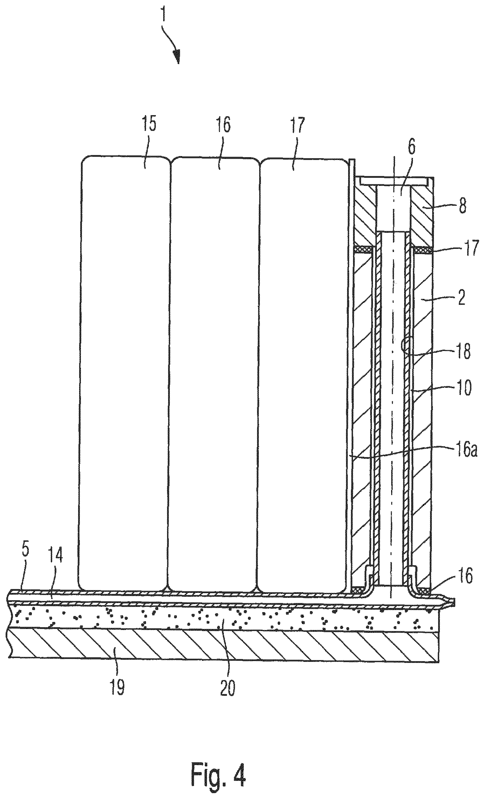

Figur 4 zeigt einen Längsschnitt durch das Zellmodul 1. Auf die Kühlplatte 5, in deren Innerem ein Kühlkanalsystem 14 vorgesehen ist, sind hintereinander geschachtelt mehrere Speicherzellen 15 bis 17 angeordnet. Unterseiten der Speicherzellen 15 - 17 können z.B. über einen thermisch leitenden Kleber mit einer Oberseite der Kühlplatte 5 verklebt sein.

Wie bereits erwähnt, wird das durch die Speicherzellen gebildete Zellpaket mittels der über die Spannbänder 3, 4 (vgl. Figur 1) miteinander verbundenen Druckplatten zusammengespannt, von denen hier lediglich die Druckplatte 2 dargestellt ist.

Zwischen die das Gehäuse der Speicherzelle 17 und die Druckplatte 2 kann eine Isolierschicht 16 eingebracht sein, welche das Gehäuse gegenüber der Druckplatte 2 thermisch isoliert.

Wie aus Figur 4 ersichtlich ist, steht die Druckplatte 2 auf einer Oberseite der Kühlplatte 5 auf, wobei zwischen einer Unterseite der Druckplatte 2 und der Oberseite der Kühlplatte 5 eine thermische Isolierung 16 vorgesehen sein kann. Das Flanschelement 8 des Zulaufs 6 sitzt ebenfalls über eine thermische Isolierung 17 auf einer Oberseite der Druckplatte 2 auf.

Wie bereits erwähnt, steht der Zulauf 6 über dem Verbindungskanal 10 mit dem Kühlkanalsystem 14 in Fluidverbindung.

Bei dem in Figur 4 gezeigten Ausführungsbeispiel sind in der Druckplatte 2 die Druckplatte 2 von oben nach unten durchsetzende Kanäle vorgesehen, von denen hier lediglich ein Kanal 18 zu sehen ist, in den der Verbindungskanal 10 eingeschoben ist.

Wie aus Figur 4 ersichtlich ist, berührt der Verbindungskanal 10 den Kanal 18 nicht, insbesondere nicht unmittelbar, was zur Folge hat, dass der Verbindungskanal 10 gut gegenüber dem Kanal 18 bzw. der Druckplatte 2 thermisch isoliert ist. Somit steht keines der fluidleitenden Bauteile 5, 8, 10 etc. in direktem Kontakt mit der Druckplatte.

Das in Figur 4 nur teilweise dargestellte Zellmodul 1 ist in einem Speichergehäuse angeordnet, von dem in Figur 4 lediglich ein Teilabschnitt 19 des Gehäusebodens zu erkennen ist. Zwischen einer Unterseite der Kühlplatte 5 des Zellmoduls 1 und einer Oberseite des Speichergehäusebodens 19 ist eine Isolierung 20 vorgesehen. Durch die Isolierung 20 wird sichergestellt, dass die Kühlplatte 5 nicht das Speichergehäuse bzw. den Speichergehäuseboden 19 kühlt.

Figur 5 zeigt einen zu der Schnittdarstellung der Figur 4 senkrechten Schnitt durch das Zellmodul und zwar im Bereich des Verbindungskanals 10. Zusätzlich zu den Kanälen, welche zur Aufnahme der Verbindungskanäle vorgesehen sind, weist die Druckplatte 2 eine Bohrung 21 auf, die zur Aufnahme einer Schraube bzw. Gewindestange vorgesehen ist, über die die Druckplatte 2 mit dem Speichergehäuseboden 19 verschraubt werden kann. Hierzu ist in dem Speichergehäuseboden 19 eine entsprechende Gewindebohrung 22 vorgesehen. Durch eine Schraube bzw. Gewindestange wird die Druckplatte 2 unmittelbar mit dem Speichergehäuseboden 19 verspannt. Die Kleberschicht, welche die Unterseiten der Speicherzellen 15 - 17 mit der Oberseite der Kühlplatte 5 verbindet, wird hierdurch nicht beeinträchtigt. Vorzugsweise ist in einem Bereich, in dem die Druckplatte 2 auf einem vom Speichergehäuseboden 19 nach oben abstehenden Auflager 19a aufliegt, ebenfalls eine Isolierung vorgesehen.

Um die Druckplatte 2 darüber hinaus thermisch von dem Speichergehäuse zu entkoppeln, beispielsweise wenn der Verbindungskanal 10 von der Druckplatte 2 nicht thermisch entkoppelt bzw. in die Druckplatte 2 integriert ist, kann zwischen die Druckplatte 2 und das Speichergehäuse 19 ein thermisch isolierendes Element eingebaut werden, welches für eine Verschraubung der Anordnung "hart" sein muss bzw. nicht fließen darf.

## Patentansprüche

1. Vorrichtung zur Spannungsversorgung, insbesondere zur Spannungsversorgung eines Kraftfahrzeugs, mit
- einem Zellmodul (1), das mehrere Speicherzellen (15-17) aufweist, die zwischen einem ersten und einem zweiten plattenartigen Element (2) angeordnet sind, wobei Gehäuse der Speicherzellen (15-17) eckig sind,
- einem mit Unterseiten der Speicherzellen (15-17) thermisch leitend verbundenen, plattenartigen Kühlkörper (5), in dessen Innerem ein Kühlkanalsystem (14) vorgesehen ist, das in Fluidverbindung mit mindestens einem Kühl-/Kältemittelzulauf (6) und mindestens einem Kühl-/Kältemittelablauf (7) steht,
wobei der mindestens eine Kühl-/Kältemittelzulauf (6) und/oder der mindestens eine Kühl-/Kältemittelablauf (7) im Bereich einer dem plattenartigen Kühlkörper (5) abgewandten Oberseite des ersten und/oder des zweiten plattenartigen Elements (2) angeordnet ist, **dadurch gekennzeichnet, dass**
die plattenartigen Elemente (2) jeweils über ein linkes und ein rechtes Spannelement (3, 4) miteinander verbunden sind, wobei die Speicherzellen (15-17) des Zellmoduls (1) mittels der Spannelemente (3, 4) zwischen den plattenartigen Elementen (2) eingespannt sind, die Unterseiten der Speicherzellen (15-17) über einen thermisch leitenden Kleber mit dem plattenartigen Kühlkörper (5) verbunden sind und
in dem ersten und/oder dem zweiten plattenartigen Element (2) ein sich von dem Kühlkanalsystem (14) zu dem Kühl-/Kältemittelzulauf (6) und ein weiterer sich von dem Kühlkanalsystem (14) zu dem Kühl-/Kältemittelablauf (7) erstreckender Kanal (18) vorgesehen ist.

2. Vorrichtung nach Anspruch 1,
**dadurch gekennzeichnet, dass** der Kühl-/Kältemittelzulauf (6) über mindestens einen ersten und der Kühl-/Kältemittelablauf (7) über
mindestens einen zweiten Verbindungskanal (10, 11) mit dem Kühlkanalsystem (14) verbunden ist.

3. Vorrichtung nach Anspruch 1 oder 2,
**dadurch gekennzeichnet, dass** der sich von dem Kühlkanalsystem (14) zu dem Kühl-/Kältemittelzulauf (6) erstreckende Kanal den ersten Verbindungskanal bildet und der sich von dem Kühlkanalsystem (14) zu dem Kühl-/Kältemittelablauf (7) erstreckende Kanal den zweiten Verbindungskanal bildet, wobei Kühl- oder Kältemittel unmittelbar in den Kanälen (18) strömt.

4. Vorrichtung nach einem der vorangehenden Ansprüche,
**dadurch gekennzeichnet, dass** der Kühl-/Kältemittelzulauf (6) und/oder der Kühl-/Kältemittelablauf (7) integraler Bestandteil des ersten oder des zweiten plattenartigen Elements (2) ist.

5. Vorrichtung nach einem der Ansprüche 3 bis 5,
**dadurch gekennzeichnet, dass** die Verbindungskanäle (10, 11) separate Bauteile sind, die in den Kanälen (18) angeordnet sind.

6. Vorrichtung nach einem der Ansprüche 2 bis 6,
**dadurch gekennzeichnet, dass** die Verbindungskanäle (10, 11) stoffschlüssig mit dem Kühlkanalsystem (14) verbunden sind.

7. Vorrichtung nach einem der Ansprüche 2 bis 7,
**dadurch gekennzeichnet, dass** der Kühl-/Kältemittelzulauf (6) und der Kühl-/Kältemittelablauf (7) durch Flanschelemente gebildet sind, die jeweils mit einem der Verbindungskanäle (10) verbunden sind oder dass die Flanschelemente integraler Bestandteil des ersten bzw. zweiten plattenartigen Elements (2) sind.

8. Vorrichtung nach Anspruch 5,
**dadurch gekennzeichnet, dass** die Verbindungskanäle (10, 11) gegenüber den Kanälen (18), in denen sie angeordnet sind, thermisch isoliert sind, derart, dass die Verbindungskanäle (10, 11) die Kanäle (18) nicht unmittelbar berühren.

9. Vorrichtung nach einem der vorangehenden Ansprüche,
**dadurch gekennzeichnet, dass** das Zellmodul (1) und der Kühlkörper (5) in ein Speichergehäuse (19) eingesetzt sind, wobei der Kühlkörper (5) gegenüber dem Speichergehäuse (19) thermisch isoliert ist, derart, dass er das Speichergehäuse (19) nicht unmittelbar berührt.

10. Vorrichtung nach Anspruch 9,
**dadurch gekennzeichnet, dass** die plattenartigen Elemente (2) über Auflager (12, 13) auf einem Boden (19) des Speichergehäuses aufstehen.

11. Vorrichtung nach einem der Ansprüche 2 bis 10,
**dadurch gekennzeichnet, dass** das Kühlkanalsystem (14), die Verbindungskanäle (10, 11), der Kühl-/Kältemittelzulauf (6) und der Kühl-/Kältemittelablauf (7) für eine Durchströmung mit einem Kältemittel bestimmt und geeignet sind.

## Claims

1. A device for supplying power, especially for supplying power to a motor vehicle, with
- a cell module (1) which has a plurality of storage cells (15-1 7) which are arranged between a first and a second plate-like element (2), wherein housings of the storage cells (15-1 7) are ones with corners,
- a plate-like heat sink (5) connected in thermally conductive manner to undersides of the storage cells (15-17), in the interior of which heat sink a cooling-duct system (14) is provided which is in a fluidic connection with at least one coolant/refrigerant inlet (6) and at least one coolant/refrigerant outlet (7),
wherein the at least one coolant/refrigerant inlet (6) and/or the at least one coolant/refrigerant outlet (7) is arranged in the region of an upper side, remote from the plate-like heat sink (5), of the first and/or the second plate-like element (2),
**characterised in that**
the plate-like elements (2) are connected together in each case via a left-hand and a right-hand tensioning element (3, 4), the storage cells (15-17) of the cell module (1) being clamped between the plate-like elements (2) by means of the tensioning elements (3, 4), the undersides of the storage cells (15-17) are connected to the plate-like heat sink (5) via a thermally conductive glue, and
a duct (18) extending from the cooling-duct system (14) to the coolant/refrigerant inlet (6) and a further duct extending from the cooling-duct system (14) to the coolant/refrigerant outlet (7) is provided in the first and/or the second plate-like element (2).

2. A device according to Claim 1,
**characterised in that** the coolant/refrigerant inlet (6) is connected via at least a first, and the coolant/refrigerant outlet (7) is connected via at least a second, connecting duct (10, 11) to the cooling-duct system (14).

3. A device according to Claim 1 or Claim 2,
**characterised in that** the duct extending from the cooling-duct system (14) to the coolant/refrigerant inlet (6) forms the first connecting duct and the duct extending from the cooling-duct system (14) to the coolant/refrigerant outlet (7) forms the second connecting duct, with coolant or refrigerant flowing directly in the ducts (18).

4. A device according to one of the preceding claims,
**characterised in that** the coolant/refrigerant inlet (6) and/or the coolant/refrigerant outlet (7) is an integral constituent of the first or of the second plate-like element (2).

5. A device according to one of Claims 3 to 5,
**characterised in that** the connecting ducts (10, 11) are separate components which are arranged in the ducts (18).

6. A device according to one of Claims 2 to 6,
**characterised in that** the connecting ducts (10, 11) are connected to the cooling-duct system (14) by a material bond.

7. A device according to one of Claims 2 to 7,
**characterised in that** the coolant/refrigerant inlet (6) and the coolant/refrigerant outlet (7) are formed by flange elements which are connected in each case to one of the connecting ducts (10) or in that the flange elements are an integral constituent of the first or second plate-like element (2).

8. A device according to Claim 5,
**characterised in that** the connecting ducts (10, 11) are thermally insulated from the ducts (18) in which they are arranged, such that the connecting ducts (10, 11) do not directly contact the channels (18).

9. A device according to one of the preceding claims,
**characterised in that** the cell module (1) and the heat sink (5) are inserted into a storage housing (19), the heat sink (5) being thermally insulated from the storage housing (19) such that it does not directly contact the storage housing (1 9).

10. A device according to Claim 9,
**characterised in that** the plate-like elements (2) stand via supports (12, 1 3) on a base (19) of the storage housing.

11. A device according to one of Claims 2 to 10,
**characterised in that** the cooling-duct system (14), the connecting ducts (10, 11), the coolant/refrigerant inlet (6) and the coolant/refrigerant outlet (7) are intended and suitable for a refrigerant to flow through them.

## Revendications

1. Dispositif d'alimentation en tension, en particulier destiné à l'alimentation en tension d'un véhicule comprenant :
- un module de cellules (1) comportant plusieurs cellules d'accumulation (15-17) qui sont montées entre un premier élément en forme de plaque et un second élément en forme de plaque (2), les boîtiers des cellules d'accumulation (15-17) étant angulaires,
- un corps de refroidissement en forme de plaque (5) relié de façon thermiquement conductrice aux faces inférieures des cellules d'accumulation (15, 17), et à l'intérieur duquel est prévu un système de canal de refroidissement (14) qui est en liaison fluidique avec au moins une arrivée d'agent de refroidissement / frigorifique (6) et avec au moins une sorte d'agent de refroidissement / frigorifique (7),
l'arrivée d'agent de refroidissement / frigorifique (6) et/ou la sortie d'agent de refroidissement / frigorifique (7) étant située(s) dans la zone de la face supérieure du premier et/ou du second élément en forme de plaque (2) située à l'opposé du corps de refroidissement en forme de plaque (5),
**caractérisé en ce que**
les éléments en forme de plaque (2) sont respectivement reliés entre eux par l'intermédiaire d'un élément de serrage gauche et d'un élément de serrage droit (3, 4), les cellules d'accumulation (15, 17) du module de cellules (1) étant enserrées entre les éléments en forme de plaque (2) au moyen des éléments de serrage (3, 4), les faces inférieures des cellules d'accumulation (15, 17) étant reliées au corps de refroidissement (5) en forme de plaque par l'intermédiaire d'une colle thermiquement conductrice, et
dans le premier et/ ou dans le second élément en forme de plaque (2), il est prévu un canal (18) s'étendant du système de canal de refroidissement (14) à l'arrivée d'agent de refroidissement / frigorifique (6) et un autre canal (18) s'étendant du système de canal de refroidissement (14) à la sortie d'agent de refroidissement / frigorifique (7).

2. Dispositif conforme à la revendication 1,
**caractérisé en ce que**
l'arrivée d'agent de refroidissement / frigorifique (6) est reliée au système de canal de refroidissement (14) par l'intermédiaire d'au moins un premier canal de liaison (10, 11) et la sortie d'agent de refroidissement / frigorifique (7) est reliée au système de canal de refroidissement (14) par l'intermédiaire d'au moins un second canal de liaison (10, 11).

3. Dispositif conforme à la revendication 1 ou 2,
**caractérisé en ce que**
le canal s'étendant du système de canal de refroidissement (14) à l'arrivée d'agent de refroidissement / frigorifique (6) forme le premier canal de liaison et le canal s'étendant du système de canal de refroidissement (14) à la sortie d'agent de refroidissement / frigorifique (7) forme le second canal de liaison, le fluide de refroidissement ou de frigorifique s'écoulant directement dans les canaux (18).

4. Dispositif conforme à l'une des revendications précédentes,
**caractérisé en ce que**
l'arrivée d'agent de refroidissement / frigorifique (6) et/ou la sortie d'agent de refroidissement / frigorifique (7) fait(font) partie intégrante du premier ou du second élément en forme de plaque (2).

5. Dispositif conforme à l'une des revendications 3 à 5,
**caractérisé en ce que**
les canaux de liaison (10, 11) sont des éléments séparés qui sont montés dans les canaux (18).

6. Dispositif conforme à l'une des revendications 2 à 6,
**caractérisé en ce que**
les canaux de liaison (10, 11) sont reliés par une liaison par la matière au système de canal de refroidissement (14).

7. Dispositif conforme à l'une des revendications 2 à 7,
**caractérisé en ce que**
l'arrivée d'agent de refroidissement / frigorifique (6) et la sortie d'agent de refroidissement / frigorifique (7) est(sont) formée(s) par des éléments à brides qui sont respectivement reliés avec l'un des canaux de liaison (10), ou les éléments à brides font partie intégrante du premier ou du second élément en forme de plaque (2).

8. Dispositif conforme à la revendication 5,
**caractérisé en ce que**
les canaux de liaison (10, 11) sont isolés thermiquement par rapport aux canaux (18) dans lesquels ils sont montés de sorte que les canaux de liaison (10, 11) ne viennent pas directement en contact avec les canaux (18).

9. Dispositif conforme à l'une des revendications précédentes,
**caractérisé en ce que**
le module de cellules (1) et le corps de refroidissement (5) sont logés dans un boîtier d'accumulation (19), le corps de refroidissement (5) étant thermiquement isolé par rapport au boîtier d'accumulation (19) de sorte qu'il ne vienne pas directement en contact avec le boîtier d'accumulation (19).

10. Dispositif conforme à la revendication 9,
**caractérisé en ce que**
les éléments en forme de plaque (2) sont dressés sur le fond (19) du boîtier d'accumulation par l'intermédiaire de supports (12, 13).

11. Dispositif conforme à l'une des revendications 2 à 10,
**caractérisé en ce que**
le système de canal de refroidissement (14), les canaux de liaison (10, 11), l'arrivée d'agent de refroidissement / frigorifique (6) et la sortie d'agent de refroidissement / frigorifique (7) sont conçus et adaptés pour être parcourus par un fluide frigorifique.
